# EUROPÄISCHE PATENTSCHRIFT

(11) **EP 2 403 689 B1**
(45) Veröffentlichungstag und Bekanntmachung des Hinweises auf die Patenterteilung: **07.05.2014**
(21) Anmeldenummer: 10708121.8
(22) Anmeldetag: 03.03.2010
(51) Int. Cl.: B25J 5/02, B25J 9/00, B25J 19/00, B05B 13/04

(54) **ROBOTERANORDNUNG, INSBESONDERE IN EINER LACKIERKABINE**
ARRANGEMENT OF ROBOTS
ARRANGEMENT DE ROBOTS

(30) Priorität: 06.03.2009 DE 102009012140
(43) Veröffentlichungstag der Anmeldung: 11.01.2012
(73) Patentinhaber: Dürr Systems GmbH, 74321 Bietigheim-Bissingen (DE)
(72) Erfinder: HAAS, Jürgen, 75438 Knittlingen (DE); BAUMANN, Michael, 74223 Flein (DE); ESSLINGER, Stefan, 71711 Steinheim-Höpfigheim (DE); FREY, Marcus, 71263 Weil der Stadt (DE); HERRE, Frank, 71739 Oberriexingen (DE); HEZEL, Thomas, 71679 Asperg (DE); MEISSNER, Alexander, 70193 Stuttgart (DE); SCHUMACHER, Hans, 71101 Schönaich (DE); VERGARA, Salvador, 74336 Brackenheim-Hausen (DE); HANNIG, Detlev, 73650 Winterbach (DE); ENDREGAARD, Einar, Rochester MI 48306 (US); OSTIN, Richard, Farmington MI 48335 (US); SCHAAL, Andreas, 72074 Tübingen (DE)
(74) Vertreter: Beier, Ralph
(86) Internationale Anmeldenummer: PCT/EP2010/001327
(87) Internationale Veröffentlichungsnummer: WO 2010/099954

(56) Entgegenhaltungen:
- EP-A1- 1 609 532
- DE-A1- 10 155 759
- DE-T2- 69 403 130
- DE-U1-202007 010 812
- JP-A- 1 266 870
- JP-A- 2 303 792
- US-A1- 2008 184 932

## Beschreibung

Die Erfindung betrifft eine Lackierkabine.

Aus EP 1 609 532 B1 ist eine Lackieranlage zur Lackierung von Kraftfahrzeugkarosseriebauteilen bekannt, bei der Lackierroboter und Handhabungsroboter (z.B. Türöffner, Haubenöffner) an Verfahrschienen ("rails") verfahrbar montiert sind, wobei die Roboter jeweils durch sogenannte Energieführungsketten mit den zum Betrieb erforderlichen Medien (z.B. Lack, Lösemittel, Antriebsluft, Pulsluft, Hochspannung, etc.) versorgt werden. Hierbei ist jeder Verfahrschiene eine Spur für die Energieführungsketten der auf dieser Verfahrschiene montierten Roboter zugeordnet. Dies bedeutet, dass die zu einer bestimmten Verfahrschiene gehörenden Energieführungsketten hintereinander in derselben Spur verlaufen.

Nachteilig an einer solchen Anordnung ist die Tatsache, dass die Energieführungsketten derselben Verfahrschiene miteinander kollidieren können, wodurch der Bewegungsspielraum der zugehörigen Roboter eingeschränkt wird.

Weiterhin ist zum Stand der Technik hinzuweisen auf JP-A-02 303 792, US-A 2008 184 932, DE-U-20 2007 010 812, EP-A-1 609 532 und JP-A-01 266 870. Keine dieser Druckschriften offenbart jedoch eine Roboteranordnung, bei der eine Energieführungskette nach unten unter die Roboterarbeitsebene reicht. Nachteilig an den bekannten Roboteranordnungen ist deshalb die Tatsache, dass für die Energieführungsketten relativ viel Platz erforderlich ist.

Der Erfindung liegt deshalb die Aufgabe zugrunde, eine entsprechend verbesserte Lackierkabine zu schaffen.

Diese Aufgabe wird durch eine erfindungsgemäße Lackierkabine gemäß dem Hauptanspruch gelöst.

Die Erfindung umfasst die allgemeine technische Lehre, die Energieführungsketten, die den Robotern an derselben Verfahrschiene zugeordnet sind, zumindest teilweise in getrennten Spuren verlaufen zu lassen.

Die erfindungsgemäße Roboteranordnung weist ebenfalls eine Verfahrschiene auf, die herkömmlich ausgebildet sein kann und vorzugsweise eine Linearbewegung ermöglicht. Aus EP 1 609 532 B1 und US 2008/0184932 A1 sind Beispiele derartiger Verfahrschienen bekannt, so dass der Inhalt dieser Veröffentlichungen der vorliegenden Beschreibung hinsichtlich des konstruktiven Aufbaus der Verfahrschiene zuzurechnen ist.

Darüber hinaus weist die erfindungsgemäße Roboteranordnung mehrere Roboter auf, die entlang der Verfahrschiene verfahrbar sind, so dass die Verfahrschiene mehrere Roboter führt, die entlang der Verfahrschiene verfahrbar sind. Vorzugsweise handelt es sich bei den Robotern um Lackierroboter und/oder Handhabungsroboter (z.B. Haubenöffner, Türöffner), wie sie beispielsweise aus EP 1 609 532 B1 bekannt sind, so dass der Inhalt dieser Veröffentlichung der vorliegenden Beschreibung hinsichtlich der Funktion und des konstruktiven Aufbaus der Roboter zuzurechnen ist.

Die Roboter sind vorzugsweise mehrachsig und weisen beispielsweise einschließlich der Linearachse 3, 4, 5 oder 6 bewegliche Achsen auf. Darüber hinaus führen die Roboter vorzugsweise eine mehrachsige Roboterhandachse mit 2, 3 oder 4 Achsen. Ferner ist an der Roboterhandachse bzw. an einem distalen Roboterarm vorzugsweise ein Werkzeug montiert, wie beispielsweise ein Zerstäuber (z.B. Rotationszerstäuber, Luftzerstäuber, Airless-Geräte, Airmix-Geräte, Ultraschallzerstäuber, etc.) oder ein Griff zum öffnen von Hauben oder Türen von Kraftfahrzeugkarosserien.

Ferner weist auch die erfindungsgemäße Roboteranordnung mehrere Energieführungsketten auf, die jeweils einen der Roboter versorgen und diesem Roboter zugeordnet sind, wobei jede der Energieführungsketten entlang der Verfahrschiene in einer bestimmten Spur verläuft.

Der im Rahmen der Erfindung verwendete Begriff einer Energieführungskette ist allgemein zu verstehen und nicht auf Energieführungsketten beschränkt, die Energieleitungen, wie beispielsweise Stromleitungen, führen. Vielmehr können die erfindungsgemäßen Energieführungsketten pneumatische, hydraulische und/oder elektrische Leitungen führen. Derartige Energieführungsketten sind beispielsweise von den deutschen Firmen Igus GmbH, Kabelschlepp GmbH und Murrplastik Systemtechnik GmbH erhältlich. Vorzugsweise handelt es sich bei den erfindungsgemäßen Energieführungsketten jedoch um zweidimensionale Energieführungsketten, die als solche lediglich eine zweidimensionale Abrollbewegung ermöglichen.

Die erfindungsgemäße Roboteranordnung zeichnet sich dadurch aus, dass die Energieführungsketten, die den Robotern an derselben Verfahrschiene zugeordnet sind, in getrennten Spuren verlaufen. Hierbei besteht die Möglichkeit, dass für jede Energieführungskette jeweils eine eigene Spur vorgesehen ist. Es besteht im Rahmen der Erfindung jedoch auch die Möglichkeit, dass für die Energieführungsketten mehrere getrennte Spuren vorgesehen sind, die von jeweils einer Gruppe von Energieführungsketten belegt werden. Beispielsweise können sich zwei Roboter einer Verfahrschiene eine erste Spur für die Energieführungsketten teilen, während ein dritter Roboter derselben Verfahrschiene für seine Energieführungskette eine separate Spur hat.

Der im Rahmen der Erfindung verwendete Begriff einer Spur für die Energieführungsketten ist allgemein zu verstehen und bezeichnet vorzugsweise eine langgestreckte Abrollfläche für die jeweilige Energieführungskette, d.h. die Fläche, auf welcher die Energieführungskette abrollt und dann mit ihrer Unterseite auf der Abrollfläche aufliegt.

In einem bevorzugten Ausführungsbeispiel der Erfindung sind an einer Verfahrschiene mindestens drei Roboter verfahrbar, denen jeweils eine Energieführungskette zugeordnet ist, wobei die Energieführungskette des mittleren Roboters einerseits und die Energieführungsketten der beiden äußeren Roboter andererseits in getrennten Spuren verlaufen.

Vorzugsweise sind die verschiedenen Spuren für die Energieführungsketten vertikal getrennt. Dies bedeutet, dass die verschiedenen Spuren in unterschiedlichen Höhen verlaufen. Beispielsweise kann eine Spur über der Verfahrschiene und eine andere Spur unter der Verfahrschiene angeordnet sein. Hierbei verlaufen die getrennten Spuren vorzugsweise in einer gemeinsamen senkrechten Ebene, die vorzugsweise auch die Verfahrschiene beinhaltet, was vorteilhaft eine geringe Baubreite ermöglicht.

Im Rahmen der Erfindung besteht die Möglichkeit, dass die Energieführungsketten derselben Verfahrschiene in Längsrichtung gleich ausgerichtet sind. Dies bedeutet, dass die Energieführungsketten in derselben Richtung abrollen. Es besteht jedoch alternativ auch die Möglichkeit, dass die einer bestimmten Verfahrschiene zugeordneten Energieführungsketten unterschiedlich ausgerichtet sind und dementsprechend in unterschiedlichen Richtungen abrollen. Bei einer Anordnung mit drei verfahrbaren Robotern an einer Verfahrschiene kann es beispielsweise sinnvoll sein, dass die beiden äußeren Roboter Energieführungsketten aufweisen, die entgegengesetzt ausgerichtet sind, während der mittlere Roboter eine Energieführungskette aufweist, die beliebig ausgerichtet sein kann.

Darüber hinaus besteht im Rahmen der Erfindung die Möglichkeit, dass die Energieführungsketten in Längsrichtung gleich ausgerichtet sind und ineinander laufen. Dies bedeutet, dass die Energieführungsketten mit ihren ortsfesten Anschlusspunkten übereinander liegen und dann übereinander abrollen.

In einem bevorzugten Ausführungsbeispiel weist die erfindungsgemäße Roboteranordnung mehrere Verfahrschienen auf, die übereinander angeordnet sind und jeweils mehrere Roboter führen. Eine derartige Roboteranordnung ist beispielsweise aus EP 1 609 532 B1 bekannt, so dass der Inhalt dieser Veröffentlichung der vorliegenden Beschreibung in vollem Umfang zuzurechnen ist. Beispielsweise können an der oberen Verfahrschiene außen zwei Lackierroboter und in der Mitte ein Haubenöffner angeordnet sein, während die untere Verfahrschiene in der Mitte einen Türöffner und außen zwei Lackierroboter trägt.

Bei einer derartigen Anordnung mit mehreren Verfahrschienen ist es vorteilhaft, wenn zumindest eine der unteren Energieführungsketten unterhalb der unteren Verfahrschiene angeordnet ist. Dies ist insbesondere bei einer Lackieranlage sinnvoll, die anstelle einer herkömmlichen Nassabscheidung eine Trockenabscheidung aufweist, da dann unter dem Gitterrost der Lackierkabine genügend Platz vorhanden ist, um dort eine Energieführungskette unterzubringen. Bei der erfindungsgemäßen Roboteranordnung ist deshalb zumindest eine der unteren Energieführungsketten unterhalb einer Roboterarbeitsebene angeordnet, wobei die Roboterarbeitsebene einen Boden bildet und beispielweise den vorstehend erwähnten Gitterrost aufweisen kann.

Ferner ist es vorteilhaft, wenn zumindest eine der Energieführungsketten geschützt in einem Kasten angeordnet ist, der sich entlang der jeweiligen Verfahrschiene erstreckt. Ein derartiger Kasten kann unter der unteren Verfahrschiene und vorzugsweise auch unterhalb der Roboterarbeitsebene angeordnet sein, da dort genügend Platz vorhanden ist, wenn anstelle einer Nassabscheidung eine Trockenabscheidung eingesetzt wird.

Weiterhin ist zu erwähnen, dass die Roboter bei der erfindungsgemäßen Roboteranordnung vorzugsweise in einer im Wesentlichen geschlossenen Kabine angeordnet sind, wie es beispielsweise von herkömmlichen Lackierkabinen in Lackieranlagen für Kraftfahrzeugkarosseriebauteile bekannt ist. Der Kasten für die geschützte Unterbringung einer Energieführungskette ist dabei vorzugsweise so angeordnet, dass er mit seiner Innenwand oder mit seiner Außenwand im Wesentlichen in einer gemeinsamen Ebene mit der seitlichen Kabinenwand liegt. Hierbei grenzt der Kasten zur geschützten Aufnahme der Energieführungskette also unmittelbar von innen oder von außen an die Kabinenwand.

Ferner besteht im Rahmen der Erfindung die Möglichkeit, dass zumindest eine der unteren Energieführungsketten nach unten frei hängt. Die unteren Energieführungsketten können also in den Raum unterhalb des Kabinenbodens herabhängen.

Zur Realisierung eines sogenannten Clean-Wall-Konzepts ist es weiterhin vorteilhaft, wenn alle Energieführungsketten und vorzugsweise auch alle Verfahrschienen außerhalb der Kabine angeordnet sind, so dass die Roboter von den Verfahrschienen durch die Kabinenwand hindurch nach innen in die Kabine ragen.

Weiterhin ist es vorteilhaft, wenn die Energieführungsketten von außerhalb der Kabine für Wartungsarbeiten und Reparaturarbeiten zugänglich sind, ohne dass die Kabine von Wartungspersonal betreten werden muss.

Schließlich ist zu erwähnen, dass die Erfindung nicht nur die vorstehend beschriebene Roboteranordnung umfasst, sondern auch Schutz für eine komplette Lackieranlage mit einer derartigen Roboteranordnung beansprucht.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Querschnittsansicht einer nicht erfindungsgemäßen Lackierkabine mit zwei übereinander angeordneten Verfahrschienen für jeweils zwei Lackierroboter und einen Handhabungsroboter,
- Figur 2: eine Querschnittsansicht einer nicht erfindungsgemäßen Abwandlung des Ausführungsbeispiels gemäß Figur 1,
- Figur 3: eine Perspektivansicht der Lackierkabine gemäß Figur 1 bzw. Figur 2,
- Figur 4: eine Perspektivansicht eines alternativen Ausführungsbeispiels einer Lackierkabine, wobei die Energieführungsketten an der un-teren Verfahrschiene nach unten in den Raum unterhalb des Gitterrosts herunterhängen,
- Figur 5: eine Perspektivansicht eines nicht erfindungsgemäßen Ausführungsbeispiels, bei dem die Energieführungsketten der unteren Verfahrschiene ineinander laufen.
- Figuren 6 und 7: eine Perspektivansicht bzw eine Querschnittsansicht einer nicht erfindungsgemäßen Abwandlung des Ausführungsbeispiels gemäß den Figuren 1 und 2,
- Figuren 8 und 9: eine Perspektivansicht bzw. eine Querschnittsansicht einer nicht erfindungsgemäßen Abwandlung des Ausführungsbeispiels gemäß den Figuren 6 und 7 mit einer nach unten versetzten unteren Verfahrschiene,
- Figuren 10 und 11: eine Perspektivansicht bzw eine Querschnittsansicht einer nicht erfindungsgemäßen Abwandlung des Ausführungsbeispiels gemäß den Figuren 8 und 9 mit nur einer einzigen Verfahrschiene auf jeder Seite der Lackierkabine.

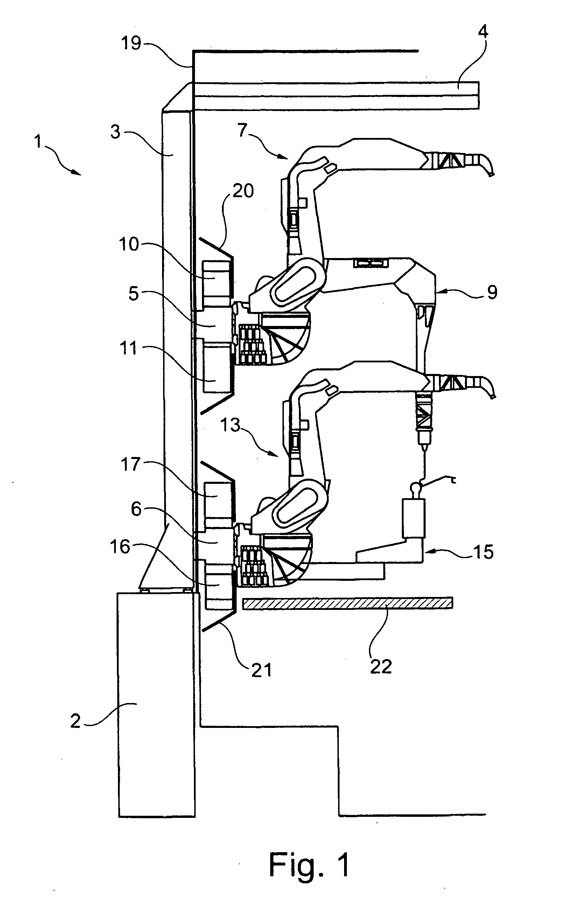

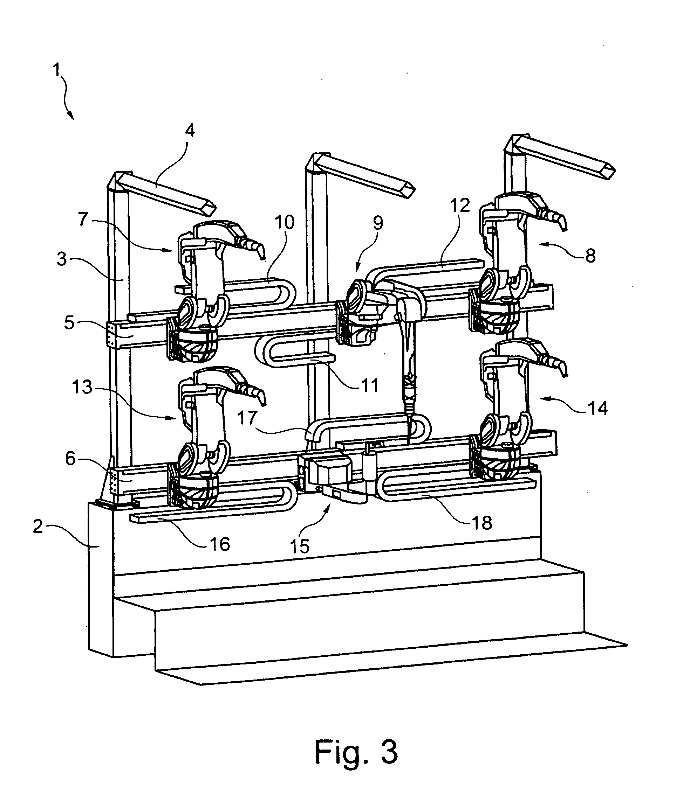

Die Figuren 1 und 3 zeigen eine nicht erfindungsgemäße Lackierkabine 1, die in einer Lackieranlage zur Lackierung von Kraftfahrzeugkarosseriebauteilen entlang einer Lackierstraße angeordnet ist.

Die Lackierkabine 1 weist auf einem Fundament 2 eine Stahlträgerkonstruktion mit mehreren Vertikalträgern 3 und jeweils einem Querträger 4 auf, wobei an den Vertikalträgern 3 übereinander zwei Verfahrschienen 5, 6 montiert sind.

An der oberen Verfahrschiene 5 sind zwei Lackierroboter 7, 8 und ein als Haubenöffner ausgebildeter Handhabungsroboter 9 verfahrbar angebracht, wobei die beiden Lackierroboter 7, 8 außen angeordnet sind, während sich der Handhabungsroboter 9 in der Mitte zwischen den beiden Lackierrobotern 7, 8 befindet.

Jedem der Lackierroboter 7, 8 und dem Handhabungsroboter 9 ist hierbei eine Energieführungskette 10, 11 bzw. 12 zugeordnet, um den jeweiligen Lackier- bzw. Handhabungsroboter 7, 8 bzw. 9 mit den zum Betrieb erforderlichen Medien (z.B. Lack, Lösemittel, Antriebsluft, Pulsluft, Hochspannung, etc.) zu versorgen.

Die Energieführungsketten 10, 12 der beiden außen liegenden Lackierroboter 7, 8 sind hierbei entgegengesetzt ausgerichtet. So rollt sich die Energieführungskette 10 des Lackierroboters 7 in der Zeichnung gemäß Figur 3 nach rechts ab und wird nach links aufgerollt. Im Gegensatz dazu rollt sich die Energieführungskette 12 des Lackierroboters 8 in der Zeichnung gemäß Figur 3 nach links ab und wird nach rechts aufgerollt.

Die Energieführungskette 11 für den mittig angeordneten Handhabungsroboter 9 weist dagegen die gleiche Ausrichtung auf wie die Energieführungskette 12 für den Lackierroboter 8.

Weiterhin ist zu erwähnen, dass die Energieführungsketten 10-12 nicht in einer gemeinsamen Spur verlaufen, sondern auf verschiedene Spuren verteilt sind. So verlaufen die Energieführungsketten 10, 12 für die beiden Lackierroboter 7, 8 in einer gemeinsamen Spur, die unmittelbar über der Verfahrschiene 5 verläuft. Die Energieführungskette 11 für den Handhabungsroboter 9 verläuft dagegen in einer getrennten Spur, die unmittelbar unter der Verfahrschiene 5 angeordnet ist.

Die untere Verfahrschiene 6 trägt ebenfalls zwei Lackierroboter 13, 14 und einen als Türöffner ausgebildeten Handhabungsroboter 15, wobei die Lackierroboter 13, 14 auch an der unteren Verfahrschiene 6 außen angeordnet sind, während sich der Handhabungsroboter 15 zwischen den beiden Lackierrobotern 13, 14 befindet.

Zur Versorgung der beiden Lackierroboter 13, 14 und des Handhabungsroboters 15 sind drei Energieführungsketten 16, 17, 18 vorgesehen, wobei die Energieführungsketten 16, 18 für die Lackierroboter 13, 14 unmittelbar unter der Verfahrschiene 6 in einer gemeinsamen Spur verlaufen, während die Energieführungskette 17 für den Handhabungsroboter 15 in einer getrennten Spur verläuft, die unmittelbar über der unteren Verfahrschiene 6 angeordnet ist.

Weiterhin ist zu erwähnen, dass die äußeren Energieführungsketten 16, 18 für die beiden außen liegenden Lackierroboter 13, 14 unterschiedlich ausgerichtet sind, wie es auch bei den oberen Energieführungsketten 10, 12 der Fall ist. Die obere Energieführungskette 17 der unteren Verfahrschiene 6 ist dagegen in der gleichen Weise ausgerichtet wie die Energieführungskette 16 für den Lackierroboter 13.

Aus der Querschnittsansicht in Figur 1 ist weiterhin ersichtlich, dass die Lackierkabine 1 seitlich von einer Kabinenwand 19 begrenzt wird, wobei die Energieführungsketten 10-12, 16-18 sowie die Verfahrschienen 5, 6 innerhalb der Lackierkabine 1 angeordnet sind.

Weiterhin ist aus der Querschnittsansicht ersichtlich, dass die Energieführungsketten 10-12 geschützt in einem Kasten 20 verlaufen, um Verschmutzungen zu vermeiden.

In gleicher Weise verlaufen auch die Energieführungsketten 16-18 an der unteren Verfahrschiene 6 in einem Kasten 21, um auch dort Verschmutzungen zu verhindern.

Ferner ist aus der Querschnittsansicht aus Figur 1 ersichtlich, dass die beiden Kästen 20, 21 mit ihrer Außenwand eine gemeinsame Ebene mit der Kabinenwand bilden.

Schließlich ist aus der Querschnittsansicht noch ein Gitterrost 22 ersichtlich, unter dem eine Overspray-Abscheidung angeordnet ist, die jedoch zur Vereinfachung nicht dargestellt ist, wobei die Overspray-Abscheidung wahlweise als Trockenabscheidung oder als Nassabscheidung ausgebildet sein kann.

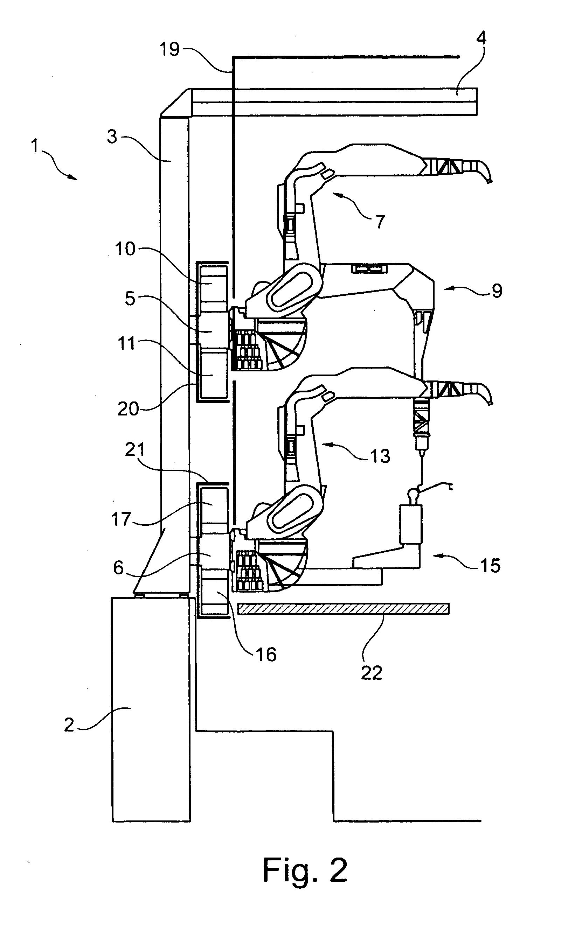

Das Ausführungsbeispiel gemäß Figur 2 stimmt weitgehend mit dem vorstehend beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die Kabinenwand 19 gegenüber den Vertikalträgern 3 nach innen versetzt ist, wobei die Energieführungsketten 10-12, 16-18 und die Verfahrschienen 5, 6 außerhalb der Kabinenwand 19 angeordnet sind. Die Lackier- bzw. Handhabungsroboter 7-9, 13-15 ragen also durch Aussparungen in der Kabinenwand 19 in den Innenraum der Lackierkabine 1 hinein. Die Kästen 20, 21 zur geschützten Unterbringung der Energieführungsketten 10-12, 16-18 liegen hierbei mit ihrer Innenwand in einer gemeinsamen Ebene mit der Kabinenwand 19.

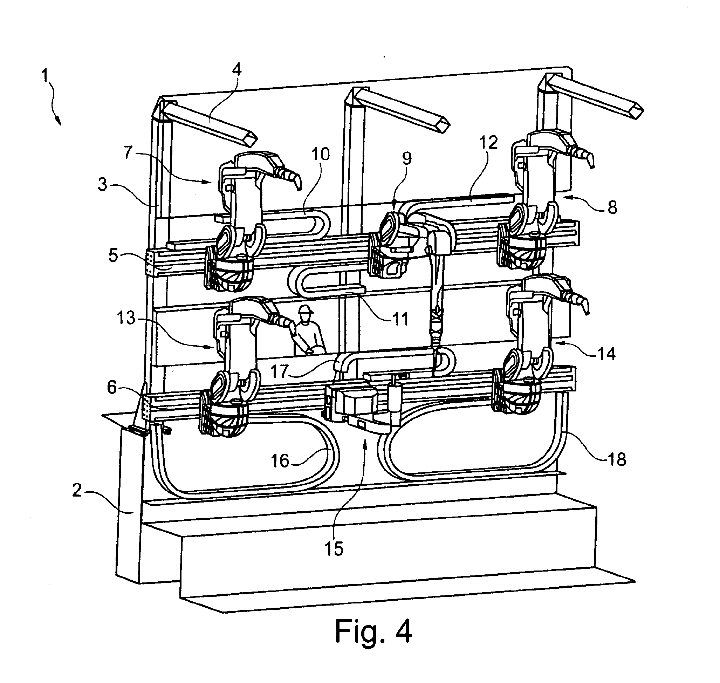

Das Ausführungsbeispiel gemäß Figur 4 stimmt ebenfalls weitgehend mit dem vorstehend beschriebenen Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Hierbei ist zu erwähnen, dass die Kästen 20, 21 zur geschützten Unterbringung der unteren Energieführungsketten 16-18 zur Vereinfachung nicht dargestellt sind. Bei diesem Ausführungsbeispiel befinden sich die Kästen 20, 21 jedoch unterhalb der Ebene des Gitterrosts 22. Dies ist möglich, weil in diesem Ausführungsbeispiel eine Trockenabscheidung eingesetzt wird, so dass unterhalb des Gitterrosts 22 genügend Platz ist, um dort die Kästen 20, 21 unterzubringen.

Eine weitere Besonderheit dieses Ausführungsbeispiels besteht darin, dass die unteren Energieführungsketten 16, 18 für die beiden Lackierroboter 13, 14 an der unteren Verfahrschiene 6 nach unten in den Raum unterhalb des Gitterrosts 22 herunterhängen.

Eine derartige Anordnung ist insbesondere deshalb möglich, weil die Overspray-Abscheidung nicht als Nassabscheidung, sondern als Trockenabscheidung ausgebildet ist, da so unterhalb des Gitterrosts 22 genügend Platz vorhanden ist.

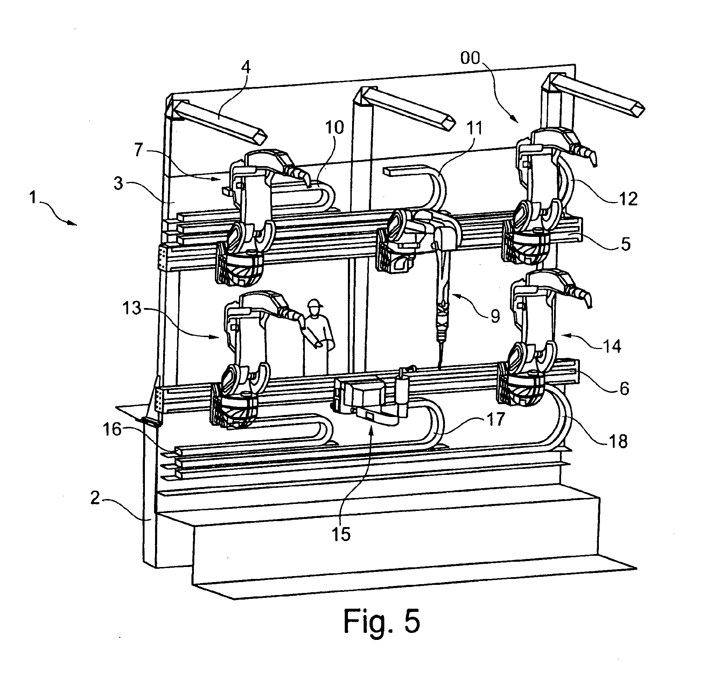

Das Ausführungsbeispiel gemäß Figur 5 stimmt wieder weitgehend mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden. Eine Besonderheit dieses Ausführungsbeispiels besteht darin, dass sämtliche Energieführungsketten 10-12, 16-18 ineinander laufen und in derselben Richtung aufrollen bzw. abrollen.

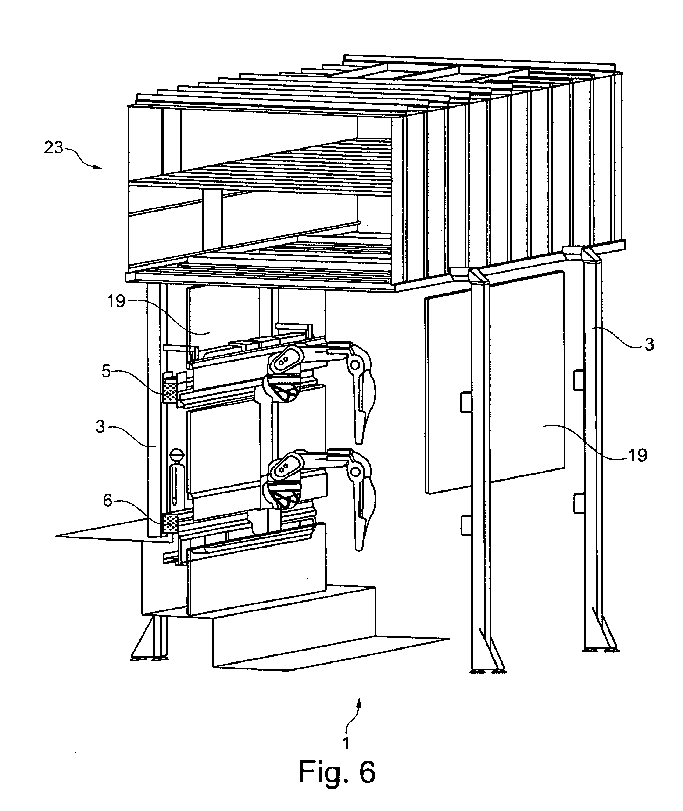

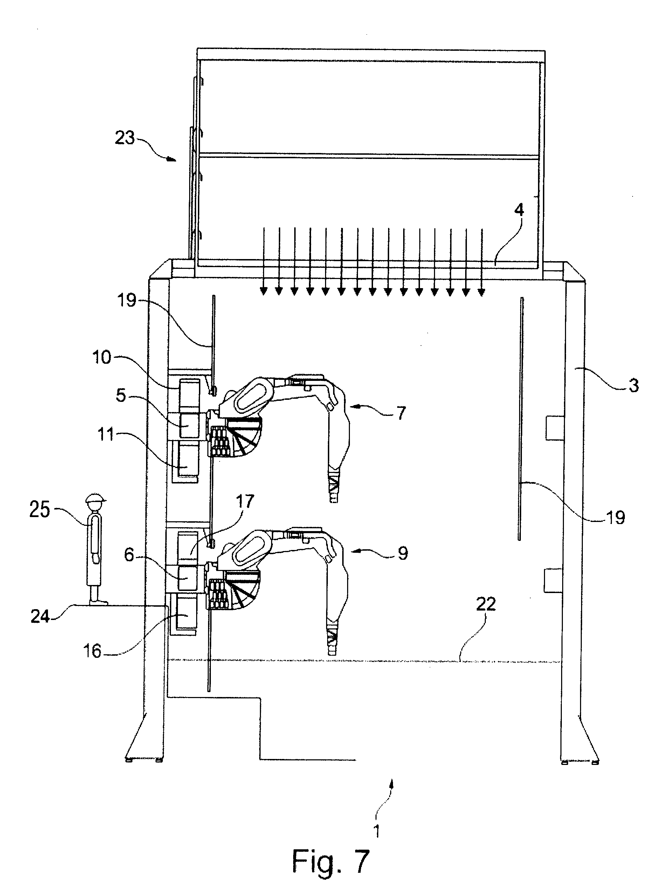

Das Ausführungsbeispiel gemäß den Figuren 6 und 7 stimmt teilweise mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Aus diesen Zeichnungen ist auch ersichtlich, dass über der Lackierkabine 1 ein sogenanntes Plenum 23 angeordnet ist, wobei das Plenum 23 durch eine Filterdecke von der darunter liegenden Lackierkabine 1 getrennt ist. Durch die Filterdecke wird Luft aus dem Plenum 23 nach unten in die Lackierkabine 1 eingeleitet, wie in Figur 7 durch die abwärts gerichteten Pfeile angedeutet ist, wobei der abwärts gerichtete Luftstrom die Lackierkabine 1 wieder durch den Gitterrost 22 verlässt. Der abwärts gerichtete Luftstrom in der Lackierkabine 1 dient dazu, den sogenannten Overspray möglichst schnell aus der Lackierkabine 1 zu entfernen, um zu verhindern, dass die Lackierkabine 1 oder die zu beschichtenden Bauteile in der Lackierkabine 1 durch den Overspray verschmutzt werden.

Weiterhin ist aus der Darstellung in Figur 7 ersichtlich, dass sich seitlich neben der Lackierkabine 1 eine Bedienebene 24 befindet, auf der eine Bedienungsperson 25 stehen kann, wobei die Bedienebene 24 gegenüber dem Gitterrost 22 nach oben versetzt ist. Die Kabinenwand 19 ist hierbei teilweise durchsichtig, so dass die Bedienungsperson 25 in die Lackierkabine 1 hineinsehen kann, um den Lackierprozess visuell zu überwachen.

Ferner ist zu diesem Ausführungsbeispiel zu erwähnen, dass das Plenum 23 zusätzlich zu dem Querträger 4 eine Querversteifung der Lackierkabine 1 bewirkt.

Darüber hinaus ist zu bemerken, dass das Plenum 23 ebenfalls von den Vertikalträgern 3 der Lackierkabine 1 getragen wird, so dass auf eine separate Stützkonstruktion für das Plenum verzichtet werden kann. Darüber hinaus ermöglicht die tragende Funktion des Plenums 23 einen Verzicht auf die Querträger 4.

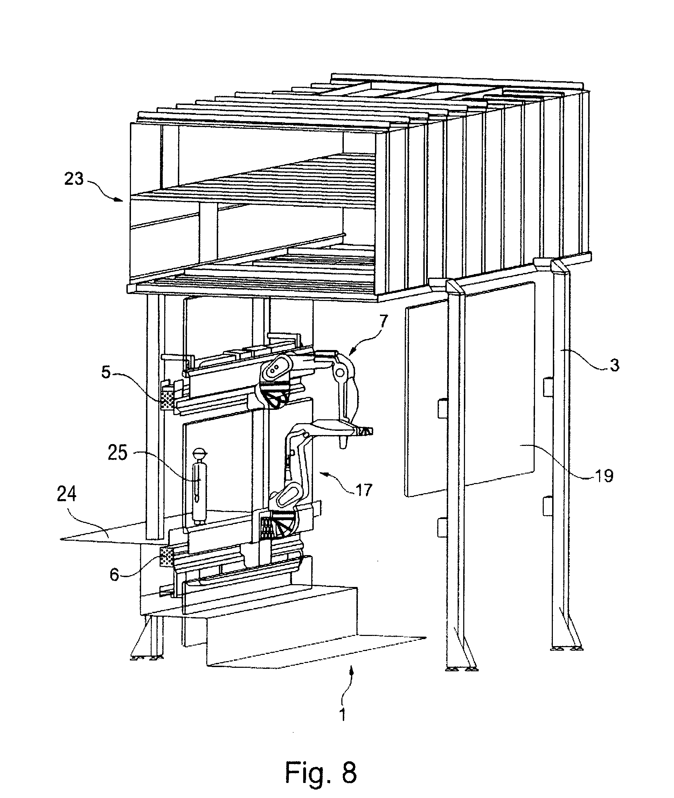

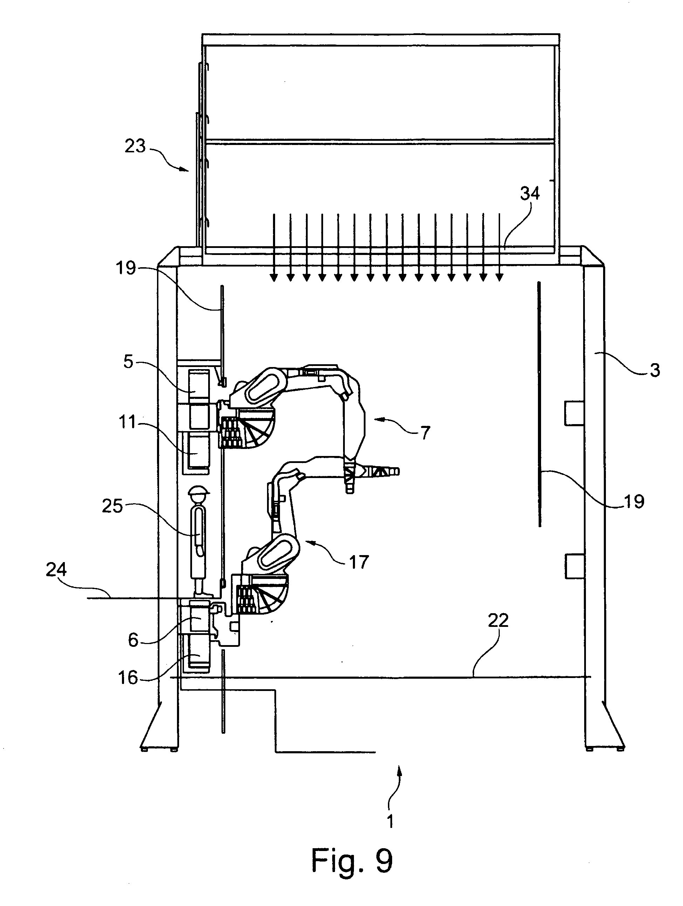

Das Ausführungsbeispiel gemäß den Figuren 8 und 9 stimmt ebenfalls teilweise mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die untere Verfahrschiene 6 gegenüber der Bedienebene 24 nach unten versetzt ist, so dass sich die untere Verfahrschiene 6 unterhalb der Bedienebene 24 befindet. Durch diese Anordnung ist es möglich, den Höhenunterschied zwischen der Bedienebene 24 und dem Gitterrost 22 auf 300mm zu minimieren.

Darüber hinaus ist insbesondere aus Figur 9 ersichtlich, dass die Bedienebene 24 bis unmittelbar an die Kabinenwand 19 begehbar ist, da die untere Verfahrschiene 6 zusammen mit den zugehörigen Energieführungsketten 16-18 nach unten versetzt ist und sich unterhalb der Bedienebene 24 befindet.

Ferner besteht bei dieser Anordnung die Möglichkeit, dass die untere Verfahrschiene 6 zusammen mit den zugehörigen Energieführungsketten 16-18 von unten gewartet wird.

In diesem Ausführungsbeispiel weist die Lackierkabine 1 eine lichte Weite von 5000mm auf, jedoch sind auch andere Kabinenbreiten realisierbar.

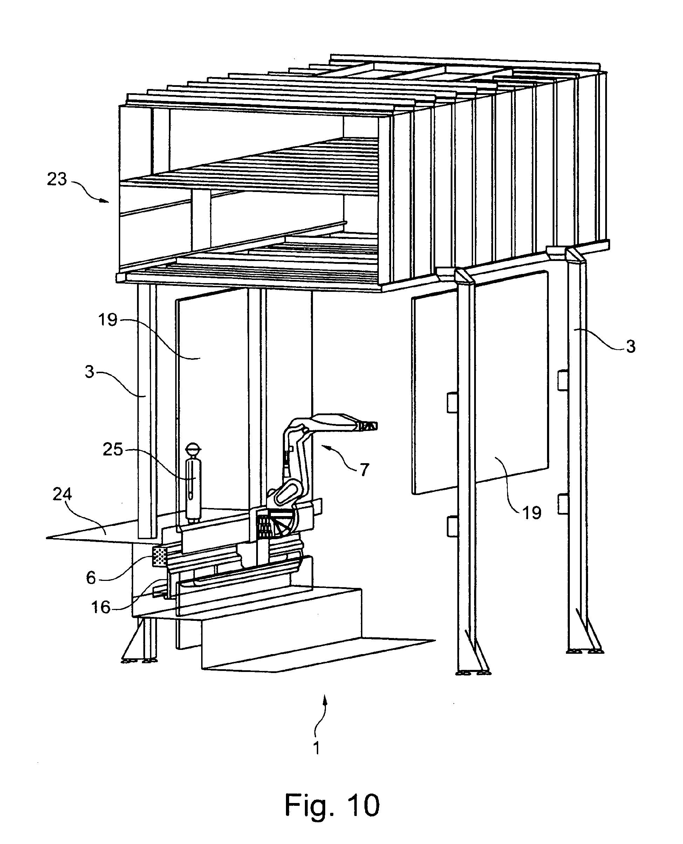

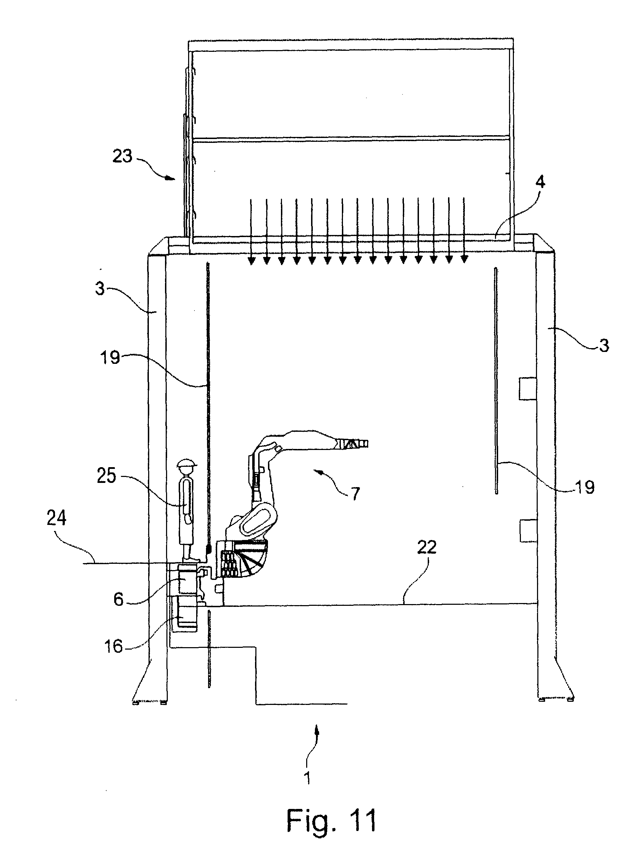

Schließlich stimmt auch das Ausführungsbeispiel gemäß den Figuren 10 und 11 teilweise mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass die obere Verfahrschiene 5 mit den zugehörigen Lackier- und Handhabungsrobotern 7-9 und den Energieführungsketten 10-12 weggelassen ist.

### Bezugszeichenliste:

- 1: Lackierkabine
- 2: Fundament
- 3: Vertikalträger
- 4: Querträger
- 5: Verfahrschiene
- 6: Verfahrschiene
- 7: Lackierroboter
- 8: Lackierroboter
- 9: Handhabungsroboter
- 10: Energieführungskette
- 11: Energieführungskette
- 12: Energieführungskette
- 13: Lackierroboter
- 14: Lackierroboter
- 15: Handhabungsroboter
- 16: Energieführungskette
- 17: Energieführungskette
- 18: Energieführungskette
- 19: Kabinenwand
- 20: Kasten
- 21: Kasten
- 22: Gitterrost
- 23: Plenum
- 24: Bedienebene
- 25: Bedienungsperson

## Patentansprüche

1. Lackierkabine (1) mit einer Roboteranordnung, mit
a) einer Verfahrschiene (5, 6),
b) mehreren Robotern (7-9, 13-15), insbesondere Lackierrobotern oder Handhabungsrobotern, die entlang der Verfahrschiene (5, 6) verfahrbar sind,
c) mehreren Energieführungsketten (10-12, 16-18), die jeweils einen der Roboter (7-9, 13-15) versorgen und diesem Roboter (7-9, 13-15) zugeordnet sind, wobei jede der Energieführungsketten (10-12, 16-18) entlang der Verfahrschiene (5, 6) in einer bestimmten Spur verläuft,
d) wobei die Energieführungsketten (10-12, 16-18), die den Robotern (7-9, 13-15) an derselben Verfahrschiene (5, 6) zugeordnet sind, in getrennten Spuren verlaufen, und
e) einer Roboterarbeitsebene (22), die einen Boden bildet und insbesondere einen Gitterrost aufweist,
f) einer oberen Verfahrschiene (5), an der mehrere obere Roboter (7-9) verfahrbar sind,
g) mehreren oberen Energieführungsketten (10-12) zur Versorgung der oberen Roboter (7-9), wobei jedem der oberen Roboter (7-9) eine der oberen Energieführungsketten (10-12) zugeordnet ist,
h) einer unteren Verfahrschiene (6), an der mehrere untere Roboter (13-15) verfahrbar sind, und
i) mehreren unteren Energieführungsketten (16-18) zur Versorgung der unteren Roboter (13-15), wobei jedem der unteren Roboter (13-15) eine der unteren Energieführungsketten (16-18) zugeordnet ist. j) wobei zumindest eine der unteren Energieführungsketten (16-18) unterhalb der Roboterarbeitsebene (22) angeordnet ist.

2. Lackierkabine nach Anspruch 1, **dadurch gekennzeichnet,**
a) **dass** an der Verfahrschiene (5, 6) mindestens drei Roboter (7-9, 13-15) verfahrbar sind,
b) **dass** den drei Robotern (7-9, 13-15) jeweils eine Energieführungskette (10-12, 16-18) zugeordnet ist,
c) **dass** die Energieführungskette (11, 17) des mittleren Roboters (9, 15) einerseits und die Energieführungsketten (10, 12, 16, 18) der beiden äußeren Roboter (7, 8, 13, 14) andererseits in getrennten Spuren verlaufen.

3. Lackierkabine nach einem der vorhergehenden Ansprüche, **dadurch gekennzeichnet,**
a) **dass** die Spuren für die Energieführungsketten (10-12, 16-18) derselben Verfahrschiene (5, 6) teilweise über der Verfahrschiene (5, 6) und teilweise unter der Verfahrschiene (5, 6) angeordnet sind, und/oder
b) **dass** die Spuren für die Energieführungsketten (10-12, 16-18) derselben Verfahrschiene (5, 6) im Wesentlichen in einer gemeinsamen senkrechten Ebene verlaufen, und/oder
c) **dass** die Energieführungsketten (10-12, 16-18) derselben Verfahrschiene (5, 6) in Längsrichtung unterschiedlich ausgerichtet sind, so dass die Energieführungsketten (10-12, 16-18) in entgegen gesetzten Richtungen abrollen und auch in entgegen gesetzten Richtungen aufrollen, und/oder
d) **dass** die Spuren für die Energieführungsketten (10-12, 16-18) derselben Verfahrschiene (5, 6) übereinander verlaufen, und/oder
e) **dass** die Energieführungsketten (10-12, 16-18) ineinander laufen.

4. Lackierkabine nach einem der vorhergehenden Ansprüche, **dadurch gekennzeichnet, dass** zumindest eine der unteren Energieführungsketten (16-18) unterhalb der unteren Verfahrschiene (5, 6) angeordnet ist.

5. Lackierkabine nach einem der vorhergehenden Ansprüche,
**dadurch gekennzeichnet,**
a) **dass** zumindest eine der unteren Energieführungsketten (16-18) geschützt in einem Kasten (21) angeordnet ist, der sich entlang der unteren Verfahrschiene (6) erstreckt, und/oder
b) **dass** der Kasten (21) unter der Roboterarbeitsebene (22) angeordnet ist.

6. Lackierkabine nach Anspruch 5,
**dadurch gekennzeichnet,**
a) **dass** die Roboter (7-9, 13-15) in der Lackierkabine angeordnet sind, die seitlich durch eine Kabinenwand (19) begrenzt ist, und
b) **dass** der Kasten (21) mit seiner Außenwand oder mit seiner Innenwand im Wesentlichen in einer gemeinsamen Ebene mit der seitlichen Kabinenwand (19) liegt.

7. Lackierkabine nach einem der vorhergehenden Ansprüche, **dadurch gekennzeichnet, dass** zumindest eine der unteren Energieführungsketten (16-18) nach unten im Wesentlichen frei durchhängt.

8. Lackierkabine nach einem der vorhergehenden Ansprüche, **dadurch gekennzeichnet,**
a) **dass** die Roboter (7-9, 13-15) in der Lackierkabine angeordnet sind, die seitlich durch eine Kabinenwand (19) begrenzt ist, und
b) **dass** alle Energieführungsketten (10-12, 16-18) außerhalb der Kabinenwand (19) angeordnet sind, und/oder
c) **dass** alle Verfahrschienen (5, 6) außerhalb der Kabinenwand (19) angeordnet sind, so dass die Roboter (7-9, 13-15) von den außen liegenden Verfahrenschienen (5, 6) durch die Kabinenwand (19) hindurch nach innen in die Kabine (1) ragen.

9. Lackierkabine nach Anspruch 8, **dadurch gekennzeichnet, dass** die Energieführungsketten (10-12, 16-18) von außerhalb der Kabinenwand (19) für Wartungsarbeiten und Reparaturarbeiten zugänglich sind, ohne dass die Kabine (1) betreten werden muss.

10. Lackierkabine nach einem der vorhergehenden Ansprüche, **dadurch gekennzeichnet, dass** die Roboter (7-9, 13-15) Lackierroboter (7, 8, 13, 14) und/oder Handhabungsroboter (9, 15) sind, insbesondere Haubenöffner (9) oder Türöffner (15).

11. Lackierkabine nach einem der vorhergehenden Ansprüche, **dadurch gekennzeichnet, dass** die Energieführungsketten (10-12, 16-18) folgende Leitungen für den jeweiligen Roboter (7-9, 13-15) enthalten:
a) Druckluftleitung,
b) Beschichtungsmittelleitung,
c) Spülmittelleitung,
d) Stromversorgungsleitung,
e) Steuerleitung.

12. Lackierkabine nach einem der vorhergehenden Ansprüche, **dadurch gekennzeichnet, dass** die einzelnen Energieführungsketten (10-12, 16-18) an einem Ende mit einem ortsfesten Anschlusspunkt und an dem anderen Ende mit dem jeweils zugeordneten Roboter (7-9, 13-15) verbunden sind, wobei die Energieführungsketten (10-12, 16-18) dazwischen kettenförmig abrollen können.

13. Lackierkabine nach einem der Ansprüche 8 bis 12, **dadurch gekennzeichnet,**
a) **dass** die Lackierkabine (1) seitlich durch eine Kabinenwand (19) begrenzt ist,
b) **dass** seitlich neben der Lackierkabine (1) eine Bedienebene (24) angeordnet ist, wobei die Bedienebene (24) für Bedienungspersonen (25) zugänglich ist,
c) **dass** die Bedienebene (24) bis unmittelbar an die Kabinenwand (19) angrenzt und bis unmittelbar vor der Kabinenwand (19) begehbar ist, und/oder
d) **dass** sich die untere Verfahrschiene (6) zusammen mit den unteren Energieführungsketten (16-18) unter der Bedienebene (24) befindet.

14. Beschichtungseinrichtung zur Beschichtung von Bauteilen, insbesondere Kraftfahrzeugkarosseriebauteilen, mit einer Lackierkabine nach einem der vorhergehenden Ansprüche.

## Claims

1. Paint cabin (1) with a robot arrangement comprising
a) a traversing rail (5, 6),
b) several robots (7-9, 13-15), particularly painting robots or handling robots, which can be moved along the traversing rail (5, 6),
c) several energy supply chains (10-12, 16-18) which in each case supply one of the robots (7-9, 13-15) and are assigned to this robot (7-9, 13-15), wherein each of the energy supply chains (10-12, 16-18) runs along the traversing rail (5, 6) in a certain track,
d) wherein the energy supply chains (10-12, 16-18) which are assigned to the robots (7-9, 13-15) on the same traversing rail (5, 6) run in separate tracks, and
e) a robot operating level (22), which forms a floor and has a grate in particular,
f) an upper traversing rail (5), on which several upper robots (7-9) can be moved,
g) several upper energy supply chains (10-12) for supplying the upper robots (7-9), wherein one of the upper energy supply chains (10-12) is assigned to each of the upper robots (7-9),
h) a lower traversing rail (6), on which several lower robots (13-15) can be moved, and
i) several lower energy supply chains (16-18) for supplying the lower robots (13-15), wherein one of the lower energy supply chains (16-18) is assigned to each of the lower robots (13-15),
j) wherein at least one of the lower energy supply chains (16-18) is arranged below the robot operating level (22).

2. Paint cabin (1) according to Claim 1,
**characterised**
a) **in that** at least three robots (7-9, 13-15) can be moved on the traversing rail (5, 6),
b) **in that** one energy supply chain (10-12, 16-18) is assigned to the three robots (7-9, 13-15) in each case,
c) **in that** the energy supply chain (11, 17) of the middle robot (9, 15) on the one hand and the energy supply chains (10, 12, 16, 18) of the two outer robots (7, 8, 13, 14) on the other hand run in separate tracks.

3. Paint cabin (1) according to any one of the preceding claims, **characterised**
a) **in that** the tracks for the energy supply chains (10-12, 16-18) of the same traversing rail (5, 6) are arranged to some extent above the traversing rail (5, 6) and to some extent below the traversing rail (5, 6), and/or
b) **in that** the tracks for the energy supply chains (10-12, 16-18) of the same traversing rail (5, 6) essentially run in a common vertical plane, and/or
c) **in that** the energy supply chains (10-12, 16-18) of the same traversing rail (5, 6) are orientated differently in the longitudinal direction, so that the energy supply chains (10-12, 16-18) roll out in opposite directions and also roll up in opposite directions, and/or
d) **in that** the tracks for the energy supply chains (10-12, 16-18) of the same traversing rail (5, 6) run above one another, and/or
e) **in that** the energy supply chains (10-12, 16-18) run inside one another.

4. Paint cabin (1) with a robot arrangement comprising according to any one of the preceding claims, **characterised in that** at least one of the lower energy supply chains (16-18) is arranged below the lower traversing rail (5, 6).

5. Paint cabin (1) according to any one of the preceding claims, **characterised**
a) **in that** at least one of the lower energy supply chains (16-18) is arranged in a protected manner in a box (21) which extends along the lower traversing rail (6), and/or
b) **in that** the box (21) is arranged below the robot operating level (22).

6. Paint cabin (1) according to Claim 5,
**characterised**
a) **in that** the robots (7-9, 13-15) are arranged in the paint cabin, which is laterally delimited by a cabin wall (19), and
b) **in that** the outer wall or the inner wall of the box (21) essentially lies in a common plane with the lateral cabin wall (19).

7. Paint cabin (1) according to any one of the preceding claims, **characterised in that** at least one of the lower energy supply chains (16-18) hangs down essentially freely.

8. Paint cabin (1) according to any one of the preceding claims, **characterised**
a) **in that** the robots (7-9, 13-15) are arranged in the paint cabin, which is laterally delimited by a cabin wall (19), and
b) **in that** all energy supply chains (10-12, 16-18) are arranged outside the cabin wall (19), and/or
c) **in that** all traversing rails (5, 6) are arranged outside the cabin wall (19), so that the robots (7-9, 13-15) project from the outer traversing rails (5, 6) inwardly through the cabin wall (19) into the cabin (1).

9. Paint cabin (1) according to claim 8, **characterised in that** the energy supply chains (10-12, 16-18) are accessible from outside of the cabin wall (19) for maintenance operations and repair operations without the cabin (1) having to be entered.

10. Paint cabin (1) according to any one of the preceding claims, **characterised in that** the robots (7-9, 13-15) are painting robots (7, 8, 13, 14) and/or handling robots (9, 15), particularly bonnet openers (9) or door openers (15).

11. Paint cabin (1) according to any one of the preceding claims, **characterised in that** the energy supply chains (10-12, 16-18) contain the following lines for the respective robots (7-9, 13-15) :
a) Compressed air line,
b) Coating agent line,
c) Rinsing agent line,
d) Power supply line,
e) Control line.

12. Paint cabin (1) according to any one of the preceding claims, **characterised in that** the individual energy supply chains (10-12, 16-18) are connected at one end to a fixed connection point and at the other end to the robot (7-9, 13-15) assigned in each case, wherein the energy supply chains (10-12, 16-18) can roll out therebetween in the manner of a chain.

13. Paint cabin (1) according to any one of the preceding claims, **characterised**
a) **in that** the paint cabin (1) is laterally delimited by a cabin wall (19),
b) **in that** an operating level (24) is arranged alongside the paint cabin (1), wherein the operating level (24) is accessible for operators (25),
c) **in that** the operating level (24) adjoins the cabin wall (19) as much as directly and can be accessed as far as directly in front of the cabin wall (19), and/or
d) **in that** the lower traversing rail (6) is located together with the lower energy supply chains (16-18) below the operating level (24).

14. Coating apparatus for coating components, particularly motor vehicle body components, with a paint cabin according to any one of the preceding claims.

## Revendications

1. Cabine de peinture (1) équipée d'un ensemble de robots, comportant
a) un rail de déplacement (5, 6),
b) plusieurs robots (7-9, 13-15), en particulier des robots de peinture ou robots de manipulation, qui sont mobiles le long du rail de déplacement (5, 6),
c) plusieurs chaînes de transport d'énergie (10-12, 16-18), qui alimentent chacune l'un des robots (7-9, 13-15) et sont associées à ce robot (7-9, 13-15), chacune des chaînes de transport d'énergie (10-12, 16-18) s'étendant le long du rail de déplacement (5, 6) dans une piste déterminée,
d) lesdites chaînes de transport d'énergie (10-12, 16-18), qui sont associées aux robots (7-9, 13-15) du même rail de déplacement (5, 6), s'étendant dans des pistes séparées, et
e) un plan de travail des robots (22) qui forme un fond et comporte en particulier une grille,
f) un rail de déplacement supérieur (5) sur lequel peuvent se déplacer plusieurs robots supérieurs (7-9),
g) plusieurs chaînes de transport d'énergie supérieures (10-12) destinées à alimenter les robots supérieurs (7-9), à chacun des robots supérieurs (7-9) étant associée une des chaînes de transport d'énergie supérieures (10-12),
h) un rail de déplacement inférieur (6) sur lequel peuvent se déplacer plusieurs robots inférieurs (13-15), et
i) plusieurs chaînes de transport d'énergie inférieures (16-18) destinées à alimenter les robots inférieurs (13-15), à chacun des robots inférieurs (13-15) étant associée une des chaînes de transport d'énergie inférieures (16-18),
j) au moins une des chaînes de transport d'énergie inférieures (16-18) étant disposée en dessous du plan de travail des robots (22).

2. Cabine de peinture selon la revendication 1, **caractérisée**
a) **en ce qu'**au moins trois robots (7-9, 13-15) sont mobiles sur le rail de déplacement (5, 6),
b) **en ce que** respectivement une chaîne de transport d'énergie (10-12, 16-18) est associée aux trois robots (7-9, 13-15),
c) **en ce que** la chaîne de transport d'énergie (11, 17) du robot central (9, 15), d'une part, et la chaîne de transport d'énergie (10, 12, 16, 18) des deux robots extérieurs (7, 8, 13, 14), d'autre part, s'étendent dans des pistes séparées.

3. Cabine de peinture selon l'une quelconque des revendications précédentes, **caractérisée**
a) **en ce que** les pistes pour les chaînes de transport d'énergie (10-12, 16-18) du même rail de déplacement (5, 6) sont disposées en partie au-dessus du rail de déplacement (5, 6) et en partie au-dessous du rail de déplacement (5, 6), et/ou
b) **en ce que** les pistes pour les chaînes de transport d'énergie (10-12, 16-18) du même rail de déplacement (5, 6) s'étendent sensiblement dans un plan vertical commun, et/ou
c) **en ce que** les chaînes de transport d'énergie (10-12, 16-18) du même rail de déplacement (5, 6) sont orientées différemment dans le sens longitudinal, de telle sorte que les chaînes de transport d'énergie (10-12, 16-18) se déroulent dans des directions opposées et s'enroulent également dans des directions opposées, et/ou
d) **en ce que** les pistes pour les chaînes de transport d'énergie (10-12, 16-18) du même rail de déplacement (5, 6) s'étendent les unes au-dessus des autres, et/ou
e) **en ce que** les chaînes de transport d'énergie (10-12, 16-18) s'étendent l'une dans l'autre.

4. Cabine de peinture selon l'une quelconque des revendications précédentes, **caractérisée en ce qu'**au moins une des chaînes de transport d'énergie inférieures (16-18) est disposée en dessous du rail de déplacement inférieur (5, 6).

5. Cabine de peinture selon l'une quelconque des revendications précédentes, **caractérisée**
a) **en ce qu'**au moins une des chaînes de transport d'énergie inférieures (16-18) est disposée de manière protégée dans un coffret (21) qui s'étend le long du rail de déplacement inférieur (6), et/ou
b) **en ce que** ledit coffret (21) est disposé en dessous du plan de travail des robots (22).

6. Cabine de peinture selon la revendication 5, **caractérisée**
a) **en ce que** les robots (7-9, 13-15) sont disposés dans la cabine de peinture qui est délimitée latéralement par une paroi de cabine (19), et
b) **en ce que** le coffret (21) est situé avec sa paroi extérieure ou avec sa paroi intérieure sensiblement dans un plan commun à la paroi latérale (19) de la cabine.

7. Cabine de peinture selon l'une quelconque des revendications précédentes, **caractérisée en ce qu'**au moins une des chaînes de transport d'énergie inférieures (16-18) est fléchie sensiblement librement vers le bas.

8. Cabine de peinture selon l'une quelconque des revendications précédentes, **caractérisée**
a) **en ce que** les robots (7-9, 13-15) sont disposés dans la cabine de peinture qui est délimitée latéralement par une paroi de cabine (19), et
b) **en ce que** toutes les chaînes de transport d'énergie (10-12, 16-18) sont disposées à l'extérieur de la paroi de cabine (19), et/ou
c) **en ce que** tous les rails de déplacement (5, 6) sont disposés à l'extérieur de la paroi de cabine (19), de telle sorte que les robots (7-9, 13-15) s'engagent à partir des rails de déplacement (5, 6), situés à l'extérieur, vers l'intérieur de la cabine (1) en passant à travers la paroi de cabine (19).

9. Cabine de peinture selon la revendication 8, **caractérisée en ce que** les chaînes de transport d'énergie (10-12, 16-18) sont accessibles à partir de l'extérieur de la paroi de cabine (19) pour des travaux de maintenance et des travaux de réparation, sans qu'il soit nécessaire de pénétrer à l'intérieur de la cabine (1).

10. Cabine de peinture selon l'une quelconque des revendications précédentes, **caractérisée en ce que** les robots (7-9, 13-15) sont des robots de peinture (7, 8, 13, 14) et/ou des robots de manipulation (9, 15), en particulier des robots d'ouverture du capot (9) ou des robots d'ouverture de porte (15).

11. Cabine de peinture selon l'une quelconque des revendications précédentes, **caractérisée en ce que** les chaînes de transport d'énergie (10-12, 16-18) contiennent les conduites/lignes suivantes pour le robot (7-9, 13-15) respectif :
a) conduite à air comprimé,
b) conduite pour produit de revêtement,
c) conduite pour produit de nettoyage,
d) ligne d'alimentation en courant,
e) ligne de commande.

12. Cabine de peinture selon l'une quelconque des revendications précédentes, **caractérisée en ce que** les différentes chaînes de transport d'énergie (10-12, 16-18) sont reliées par une extrémité à un point de raccordement fixe et par l'autre extrémité au robot (7-9, 13-15) respectivement associé, les chaînes de transport d'énergie (10-12, 16-18) pouvant se dérouler en forme de chaîne entre lesdites extrémités.

13. Cabine de peinture selon l'une quelconque des revendications 8 à 12, **caractérisée**
a) **en ce que** la cabine de peinture (1) est délimitée latéralement par une paroi de cabine (19),
b) **en ce qu'**un plan de service (24) est disposé latéralement à côté de la cabine de peinture (1), ledit plan de service (24) étant accessible aux personnes de service (25),
c) **en ce que** le plan de service (24) est adjacent jusqu'à directement au niveau de la paroi de cabine (19) et est praticable jusqu'à directement devant la paroi de cabine (19), et/ou
d) **en ce que** le rail de déplacement inférieur (6), conjointement avec les chaînes de transport d'énergie inférieures (16-18), est situé en dessous du plan de service (24).

14. Dispositif de revêtement pour le revêtement de pièces, en particulier des pièces de carrosserie automobile, comportant une cabine de peinture selon l'une quelconque des revendications précédentes.
